# EUROPÄISCHE PATENTSCHRIFT

(11) **EP 2 853 760 B1**
(45) Veröffentlichungstag und Bekanntmachung des Hinweises auf die Patenterteilung: **03.05.2017**
(21) Anmeldenummer: 14193013.1
(22) Anmeldetag: 28.12.2009
(51) Int. Cl.: F16C 33/20

(54) **Gleitelement**
Sliding element
Element coulissant

(30) Priorität: 30.12.2008 DE 102008055194
(43) Veröffentlichungstag der Anmeldung: 01.04.2015
(62) Teilanmeldung aus: 09801985.4
(73) Patentinhaber: Federal-Mogul Wiesbaden GmbH, 65201 Wiesbaden (DE)
(72) Erfinder: Adam, Achim, 64569 Nauheim (DE); Schlüter, Joachim, 65201 Wiesbaden (DE)
(74) Vertreter: Mehler Achler

(56) Entgegenhaltungen:
- EP-A1- 1 894 987
- EP-A2- 0 024 291
- EP-A2- 0 938 970
- EP-A2- 1 892 429
- DE-A1-102005 009 552
- JP-A- 2005 201 289

## Beschreibung

Die Erfindung betrifft ein Gleitelement mit einem Substrat und mit mindestens zwei auf dem Substrat aufgebrachten Schichten aus einem Gleitschichtmaterial.

Die Erfindung bezieht sich auch auf bevorzugte Verwendungen solcher Gleitelemente.

Gleitelemente als Gleitlagerelemente in Motoren bestehen meist aus mehrschichtigen Materialien mit speziell modifizierten Oberflächen, die die Gleiteigenschaften optimieren. In der Regel handelt es sich bei den Oberflächen von Gleitlagerelementen um metallische Schichten, etwa auf der Basis von Blei, Zinn oder Aluminium, die durch galvanische Prozesse, Bedampfung oder durch mechanische Plattierung aufgebracht werden.

Außerdem sind nicht-metallische Gleitschichten bekannt, die eine Kunstharzbasis aufweisen, die hinsichtlich ihrer Eigenschaften, Belastbarkeit und Verschleißfestigkeit modifiziert sind.

Obwohl die bekannten Beschichtungen eine relativ hohe Belastbarkeit aufweisen, so ist diese Belastbarkeit jedoch scharf begrenzt, so dass bei Überschreitung der Belastbarkeitsgrenze es zu einem schnellen Ausfall der Gleitfunktion kommt. Das hiermit verbundene Freilegen des Substratmaterials, das über keine ausreichenden Notlaufeigenschaften verfügt, verursacht dann das Totalversagen des Gleitlagerelementes durch Fressen.

Gleitlagerbeschichtungen auf Kunstharzbasis werden seit vielen Jahren als Hilfsmittel zur Verringerung der Reibung in mechanischen Konstruktionen eingesetzt. In der Regel werden Metall-, Kunststoff- und Gummiteile beschichtet, die ohne weitere Schmierung dauerhaft leicht beweglich sein müssen. In den typischen Anwendungen sind die Belastungen eher gering und die Randbedingungen, wie Temperatur der Medien, sind unkritisch. Aus verschiedenen Patentanmeldungen, insbesondere aus der EP 0 984 182 A1 ist es bekannt, dass auch Anwendungen im Motor, d. h. z. B. Kurbelwellenlagerungen mit solchen Gleitlagerelementen möglich sind. In dieser Schrift wird auch ein Overlay mit einer Matrix aus PI, PAI, Epoxidharz oder einem Phenolharz beschrieben, in die zur Verschleißminderung u. a. Fe₃O₄ zugesetzt werden kann

Die DE 196 14 105 A1 offenbart eine verschleiß- und kavitationsbeständige Kunststoffgleitschicht, die aus einem Matrixmaterial aus PTFE oder thermoplastischen Fluorpolymeren Fe₂O₃ und Festschmiermittel besteht. Dieses Material wird für Lager z. B. als Führungselement bei Stoßdämpfern verwendet, und ist aufgrund seines Aufbaus und der weichen Fluorpolymer-Matrix nur für niedrige Gleitgeschwindigkeiten und niedrige Belastungen geeignet.

Aus der EP 1 775 487 A2 ist ein Gleitlagerelement bekannt, das ein metallisches Trägermaterial, eine darauf aufgebrachte Aluminiumlegierung und eine Kunststoffgleitschicht aufweist. Um die Bindungsfestigkeit und Kavitationsbeständigkeit der Kunststoffgleitschicht zu verbessern, wird ein Material vorgeschlagen, das ein Bindemittel aus PI, PAI, PBI, EP und FP sowie einen Festschmierstoff, wie MoS₂, Graphit, PTFE und BN aufweist.

Die JP 2005 201289 A1 beschreibt die Herstellung einer Trockenschmiermittelschicht auf der Basis eines Duroplasten, der Fe₂O₃ enthalten kann.

Die DE 10 2005 009 552 A1 offenbart einen Gegenstand mit reibungsvermindernder Beschichtung, die auch aus mehreren Schichten zur Erzielung einer gewünschten Schichtdicke bestehen kann.

Es ist Aufgabe der Erfindung, ein Gleitelement anzugeben, das bei einer verbesserten Verschleißbeständigkeit eine höhere Spitzenbelastbarkeit aufweist und bei hohen Betriebstemperaturen und Gleitgeschwindigkeiten, wie z.B. an den beweglichen Teilen innerhalb von Verbrennungsmotoren einsetzbar ist.

Diese Aufgabe wird mit einem Gleitelement gelöst, bei dem das Gleitschichtmaterial aus einem mindestens ein vernetzbares Bindemittel oder mindestens ein hochschmelzendes Thermoplastmaterial aufweisenden Gleitlack oder aus einem Material besteht, das eine Matrix aus mindestens einem hochschmelzenden Thermoplastmaterial oder mindestens einem Duroplastmaterial aufweist und dass das Gleitschichtmaterial Fe₂O₃ aufweist.

Hierbei ist es bevorzugt, dass das Gleitschichtmaterial als Eisenoxid ausschließlich Fe₂O₃ aufweist.

Gemäß einer ersten Alternative wird ein Gleitlack beansprucht.

Unter Gleitlack wird ein flüssiger oder pulverförmiger Beschichtungsstoff verstanden, der Zusätze zur Verbesserung der Gleitfähigkeit der Oberfläche enthält, der dünn auf ein Substrat aufgetragen wird und der durch chemische oder physikalische Vorgänge, wie z. B. Verdampfen des Lösemittels oder Aushärten mittels UV-Bestrahlung, zu einem durchgehend dünnen Film ausgebildet wird.

Das vernetzbare Bindemittel des Gleitlackes besteht vorzugsweise aus PAI (Polyamidimid), PI (Polyimid), Epoxidharz, PBI (Polybenzimidazol) und/oder Silikonharz besteht. Diese Polymere zeichnen sich durch eine hohe Temperaturbeständigkeit und hervorragende Medienbeständigkeit aus.

Gemäß einer weiteren Ausführungsform kann das Bindemittel ein mittels UV-Strahlung aushärtendes Bindemittel sein. Derartige Bindemittel sind vorzugsweise ungesättigte Polyesterharze und/oder Silikone.

Gemäß einer weiteren Ausführungsform kann der Gleitlack mindestens ein hochschmelzendes Thermoplastmaterial aufweisen.

Gemäß einer zweiten Alternative wird ein Material beansprucht, das eine Matrix aus mindestens einem hochschmelzenden Thermoplastmaterial oder mindestens einem Duroplastmaterial enthält.

Unter hochschmelzenden Thermoplastmaterialien werden solche verstanden, deren Schmelzpunkt oberhalb von 230°C liegt.

Als bevorzugte hochschmelzende Thermoplaste können vorzugsweise Polyarylate, PEEK (Polyetheretherketon) und/oder PES (Polyethersulfon) eingesetzt werden.

Bevorzugte Duroplastmaterialien sind PAI (Polyamidimid), PI (Polyimid), Epoxidharz, PBI (Polybenzimidazol) und/oder Silikonharz.

Es hat sich gezeigt, dass die beanspruchten Materialien in der Kombination mit Fe₂O₃ eine deutlich bessere Spitzenbelastbarkeit aufweisen als Gleitschichtmaterialien, die kein Eisenoxid oder gegebenenfalls andere Eisenoxide aufweisen. Es werden bis zu 20 % bessere Belastbarkeitswerte erzielt.

Es wird vermutet, dass durch die Kombination des Fe₂O₃ mit den Bindemitteln bzw. den Matrixmaterialien gemäß der beiden Alternativen die Wirksamkeit des Schmierfilms verbessert wird, wodurch der Anstieg der Verschleißrate mit der spezifischen Lagerbelastung verringert wird. Hierdurch steigt die Belastungsgrenze an, was wiederum die Betriebssicherheit der Lager bei Belastung unterhalb der Belastungsgrenze signifikant erhöht.

Diese Effekte zeigen sich bei Anteilen von 0,1 bis 15 Vol.-% Fe₂O₃. Bei kleineren Anteilen ist keine Verbesserung bezüglich der Belastbarkeit feststellbar. Größere Anteile hingegen führen zu einer Schwächung des Matrixmaterials bzw. des vernetzbaren Bindemittels des Gleitlacks.

Der Anteil des Fe₂O₃ bezogen auf das gesamte Gleitschichtmaterial beträgt vorzugsweise 0,5 bis 8 Vol.-%.

Es konnte gezeigt werden, dass die Spitzenbelastbarkeit an Kurbelwellenlagern bereits bis zu 120 MPa gesteigert werden kann. Diese Spitzenbelastbarkeitswerte liegen auch deutlich über denen, die mit den Materialkombinationen gemäß der EP 0 984 182 A1. Die erfindungsgemäßen Werte werden ansonsten nur von aluminiumbasierten Sputterschichten erreicht.

Es hat sich gezeigt, dass auch die Partikelgröße des Fe₂O₃ von Bedeutung ist. Fe₂O₃ mit einer mittleren Partikelgröße von 0,01 bis 5 µm ist bevorzugt. Besonders vorteilhaft sind Pulver mit einem d50 von 0,1 bis 0,5 µm. d50 bezeichnet den Median der Korngrößen der Partikel, wobei 50 % der Partikel feiner und 50 % der Partikel größer als der jeweils angegebene Wert sind.

Der Festschmierstoffanteil des Gleitschichtmaterials liegt vorzugsweise bei einem Anteil von bis zu 30 Vol.-%. Vorzugsweise liegt der Bereich bei bis zu ≤ 9,5 %, d. h. zwischen ≥ 0 und ≤ 9,5 %. Ein besonders bevorzugter Bereich liegt bei ≥ 5 bis 30 Vol.-%.

Als Festschmierstoffe kommen Metallsulfide mit Schichtstruktur, Graphit, hexagonales Bornitrid (hBN) und/oder PTFE in Frage. Weiterhin kann das Gleitschichtmaterial Hartstoffe mit einem Anteil von bis zu 5 Vol.-%, insbesondere mit einem Anteil von 3 bis 5 Vol.-% enthalten.

Die Hartstoffe sind vorzugsweise Nitride, Carbide, Boride, Oxide und/oder Metallpulver, wobei die Hartstoffe SiC, Si₃N₄, B₄C₃, kubisches BN, TiO₂ oder SiO₂ und Metallpulver aus Ag, Pb, Au, Sn, Bi und/oder Cu bevorzugt sind.

Erfindungsgemäß sind Mehrschichtsysteme aus Fe₂O₃-haltigen Gleitschichten, wobei diese Mehrschichtsysteme so gestaltet sein können, dass eine obere Schicht als Einlaufschicht, z. B. durch den Zusatz von Hartpartikeln zur Konditionierung der Welle, und die darunterliegende Schicht als Lebensdauerschicht fungiert.

Ein Mehrschichtsystem kann auch so aufgebaut sein, dass unter der Lebensdauerschicht eine zusätzliche Gleitlackschicht aufgebracht ist, die die Betriebssicherheit der Lager dadurch weiter erhöht, dass sie insbesondere bezüglich ihrer Verschleißfestigkeit optimiert ist und so ein vollständiges Durchlaufen auf das Lagermetall hinauszögert.

Eine zusätzliche Schicht zwischen Substrat und Gleitschichtmaterial kann auch bezüglich der Haftung zum Substrat optimiert sein und wie eine Grundierung den Zweck haben, die Anbindung der Gleitlackschicht bzw. der Schicht mit einer Matrix aus hochschmelzenden Thermoplasten und Duroplasten zu verbessern. Dies kann z. B. durch eine geringe oder gar nicht additivierte, wenige Mikrometer dicke Schicht aus dem Matrixmaterial erreicht werden.

Mehrschichtsysteme lassen sich als diskrete Lagen von Schichten und auch als Gradientenschichten realisieren, bei denen die Schichteigenschaften sich kontinuierlich ändern über die Dicke.

Vorzugsweise sind zwei Schichten aus Gleitschichtmaterial auf dem Substrat aufgebracht.

Vorzugsweise ist der Fe₂O₃-Gehalt in der unteren Schicht höher als in der oberen Schicht.

Diese Ausführungsform hat den Vorteil, dass die geometrische Anpassung beschleunigt ist, da die obere Schicht dann schneller verschleißt und so die maximale Belastungsfähigkeit schneller hergestellt wird. Weiterer Verschleiß wird dann durch den Fe₂O₃-Gehalt der unteren Schicht verringert.

Wenn mehr als zwei Schichten aus Gleitschichtmaterial auf dem Substrat aufgebracht werden, ist es von Vorteil, wenn der Fe₂O₃-Anteil von der untersten bis zur obersten Schicht abnimmt. Ein geringer oder kein Fe₂O₃-Anteil in der obersten Schicht hat den Vorteil, dass die geometrische Anpassung beschleunigt ist, da die obere Schicht dann schneller verschleißt und so die maximale Belastungsfähigkeit schneller hergestellt wird. Weiterer Verschleiß wird dann durch den Fe₂O₃-Gehalt der unteren Schicht verringert.

Es ist auch vorgesehen, dass der Fe₂O₃-Anteil innerhalb einer Schicht kontinuierlich von unten nach oben abnimmt.

Das Substrat kann aus einer oder auch aus mehreren Schichten bestehen.

Vorzugsweise weist das Substrat mindestens eine Schicht aus einer Aluminium-oder einer Kupferlegierung auf. Folgende Legierungen sind ebenfalls als Substratmaterial geeignet: Ni-, Sn-, Zn-, Ag-, Au-, Bi- und Fe-Legierungen. Sämtliche Legierungen können sowohl als Lagermetallschicht als auch als dünne Deckschicht eingesetzt werden, wobei die Gleitschicht je nach Zusammensetzung als zusätzliche Einlaufschicht zur Anpassung oder Konditionierung des Wellenmaterials oder als eigenständige Gleitschicht mit hoher Lebensdauer ausgebildet sein kann.

Besonders bevorzugt ist der Einsatz der erfindungsgemäßen Schicht/Schichten als Gleitschicht/Gleitschichten auf CuSn-, CuNiSi-, CuZn-, CuSnZn-, AlSn-, AlSi-, AlSnSi-Lagermetalllegierungen.

Die Gleitschichten können mit oder ohne Zwischenschicht aufgebracht sein. Als Zwischenschichten kommen Nickel, Silber, Kupfer und/oder Eisen in Frage.

Die Dicke der Schicht oder der Schichten im Fall eines Mehrschichtsystems liegt im Bereich von 1 bis 40 µm.

Das Gleitlagerelement kann eine Lagerschale mit einem Durchmesser von bis zu 100 mm sein. In diesem Fall liegt die Dicke der Schicht oder der Schichten bei 5 bis 15 µm.

Wenn das Gleitlagerelement eine Lagerschale mit einem Durchmesser > 100 mm ist, sind Dicken der Schicht oder der Schichten von > 15 µm bis 40 µm bevorzugt.

Das Substrat kann eine herkömmliche Gleitschicht umfassen, auf der das Gleitschichtmaterial aufgebracht ist.

Grundsätzlich sind zwei Ausführungsformen möglich. In der ersten Ausführungsform ist die erfindungsgemäße Gleitschicht direkt auf einer Lagermetallschicht aufgebracht. Die zweite Ausführungsform besteht in der Beschichtung eines Substrats, das aus einem Lagermetall mit einer bereits vorliegenden metallischen Gleitschicht, die vorzugsweise durch Sputtern oder galvanische Abscheidung aufgebracht wird, besteht.

Vorzugsweise weist das Substrat eine Rauheit R_{z} von 1 bis 10 µm, insbesondere von 3 bis 8 µm auf. Unter R_{z} wird die mittlere Rautiefe nach DIN EN ISO 4287:1998 verstanden.

Die Rauheit verbessert die Haftung und führt dazu, dass bei Verschleiß zunächst nur die Spitzen, d. h. sehr geringe Oberflächenanteile des Substrats freigelegt werden, was die Tragfähigkeit erhöht, ohne gleich die Fressanfälligkeit größerer freigelegter Bereiche aufzuweisen.

Die benötigten Rauheiten können durch mechanische Verfahren wie Sandstrahlen oder Schleifen, jedoch auch chemisch durch Phosphatieren oder Anätzen erzeugt werden.

Vorzugsweise umfasst das Substrat eine Zwischenschicht, auf der das Gleitschichtmaterial aufgebracht ist. Die Zwischenschicht kann Nickel, Silber, Kupfer und/oder Eisen umfassen.

Bevorzugte Verwendungen sind mediengeschmierte Anwendungen.

Es ist bevorzugt, die Gleitelemente als Gleitlager in Verbrennungsmotoren einzusetzen.

Da die Gleitelemente sich durch eine hohe Spitzenbelastung auszeichnen, ist insbesondere die Verwendung der Gleitelemente als Gleitlager von Kurbelwellen vorgesehen. Weitere bevorzugte Verwendungen sind Gleitelemente als Kolbenhemden und als Kolbenringe, wobei insbesondere die Ringflanken den erfindungsgemäßen Schichtaufbau aufweisen, um zu verhindern, dass es zu Mikroverschweißungen mit der Kolbennutoberfläche kommt.

Im Folgenden sind einige Beispiele mit Versuchsergebnissen aufgeführt.

Die Tabelle 1 enthält nur Kupferlegierungs-Substrate und die Tabelle 2 Aluminiumsubstrate und Ausführungsbeispiele für Zweifachschichten.

**Tabelle 1 (Angaben in Vol.-%)**

| ***Nr.*** | ***Substrat*** | ***Zwi-schen-schicht*** | ***Bindemittel*** | ***Festschmierstoff*** | ***Hartstoff*** | ***Menge Fe₂O₃*** | ***Max UW Belas-tung in MPa*** |
|---|---|---|---|---|---|---|---|
| 1 | CuNi2Si | | PAI | 25% hBN | 5% SiC | 5% | 100 |
| R1 | CuNi2Si | | PAI | 30% hBN | 5% SiC | | 90 |
| 2 | CuNi2Si | | PAI | 15% MoS₂ | | 5% | 110 |
| R2 | CuNi2Si | | PAI | 20% MoS₂ | | | 100 |
| 2 | CuNi2Si | | PAI | 15% WS₂ | | 8% | 110 |
| R2 | CuNi2Si | | PAI | 23% WS₂ | | | 95 |
| 3 | CuNi2Si | | PAI | 15% Graphit | | 5% | 90 |
| R3 | CuNi2Si | | PAI | 15% Graphit | | | 85 |
| 3 | CuNi2Si | | PAI | 10% Graphit, 10%PTFE | | 5% | 85 |
| R3 | CuNi2Si | | PAI | 10% Graphit, 10%PTFE | | | 80 |
| 4 | CuNi2Si | | PEEK | 10% MoS₂, 10% hBN | | 3% | 100 |
| R4 | CuNi2Si | | PEEK | 13% MoS₂, 10% hBN | | | 90 |
| | | | | | | | |
| 5 | CuSn8Ni | Ni | PAI | 15% MoS₂ | | 5% | 110 |
| R5 | CuSn8Ni | Ni | PAI | 20% MoS₂ | | | 100 |
| 6 | CuSn8Ni | | PAI | 30% MoS₂ | | 10% | 100 |
| R6 | CuSn8Ni | | PAI | 40% MoS₂ | | | 95 |
| 7 | CuSn8Ni | | PAI | 15% MoS₂, 5% hBN | | 5% | 120 |
| R7 | CuSn8Ni | | PAI | 15% MoS₂, 10% hBN | | | 100 |
| 8 | CuSn8Ni | | PAI | 15% MoS₂ | 5% Si₃N₄ | 5% | 95 |
| R8 | CuSn8Ni | | PAI | 20% MoS₂ | 5% Si₃N₄ | | 85 |
| 9 | CuSn8Ni | Ag | PAI | 30% MoS₂ | | 10% | 115 |
| R9 | CuSn8Ni | Ag | PAI | 40% MoS₂ | | | 105 |
| 10 | CuSn8Ni | | PES | 15% MoS₂ | | 3% | 105 |
| R10 | CuSn8Ni | | PES | 18% MoS₂ | | | 90 |
| | | | | | | | |
| 11 | CuSn10Bi 3 | | PAI | 15% MoS₂ | | 5% | 100 |
| 12 | CuSn10Bi 3 | | EP | 15% hBN | | 5% | 90 |
| R12 | CuSn10Bi 3 | | EP | 20% hBN | | | 80 |
| 13 | CuSn10Bi 3 | | Silikonharz | 10% MoS₂, 10% hBN | | 3% | 90 |
| R13 | CuSn10Bi 3 | | Silikonharz | 13% MoS₂, 10% hBN | | | 80 |
| | | | | | | | |
| 14 | CuPb23Sn | Ni | PAI | 15% MoS₂ | | 5% | 105 |
| 15 | CuPb23Sn | | PAI | 15% MoS₂, 5% hBN | | 5% | 110 |
| 16 | CuPb23Sn | | EP | 15% hBN | 3% TiO₂ | 5% | 100 |

**Tabelle 2 (Angaben in Vol.-%)**

| | | ***1.Schicht*** | ***2.Schicht*** | | | | |
|---|---|---|---|---|---|---|---|
| ***Nr.*** | ***Substrat*** | | ***Bindemittel*** | ***Festschmierstoff*** | ***Hartstoff*** | ***Menge Fe₂O₃*** | ***Max UW Belas-tung in MPa*** |
| 17 | AlSn10Ni2MnCu | | PAI | 15% MoS₂, 5% hBN | | 5% | 85 |
| 18 | AlSn10Ni2MnCu | | PES | 15% MoS₂ | | 3% | 85 |
| | | | | | | | |
| 19 | AlNi2MnCu | | PAI | 15% WS₂ | 5% SiC | 8% | 95 |
| 20 | AlNi2MnCu | | EP | 15% hBN | | 5% | 95 |
| | | | | | | | |
| 21 | AlSn6Si4CuMnC r | | PAI | 10% Graphit | 3% B₄C | 5% | 80 |
| | | | | 10% PTFE | | | |
| 22 | AlSn6Si4CuMnC r | | PEEK | 10% MoS₂ | | 3% | 85 |
| | | | | 10% hBN | | | |
| | | | | | | | |
| 23 | CuNi2Si | PAI, 10% hBN | PAI | 15% Mos₂ | | | 115 |
| | | 5% Fe₂O₃ | | 15% hBN | | | |
| 24 | CuNi2Si | PAI 10% hBN 5% Fe₂O₃ | PAI | 15% MoS₂ | 5% SiC | 3% | 105 |
| 25 | CuNi2Si | PAI 10% hBN 10% Fe₂O₃ | PAI | 15% MoS₂ | | 3% | 110 |

Zur Bewertung der Leistungsfähigkeit wurden Underwood (UW)-Tests durchgeführt. Hierbei rotiert eine Welle mit Exzentergewichten in starr montierten Pleuelstangen. Die Lagerung in den Pleuelstangen wird durch die Prüflager gebildet. Die Prüflager haben eine Wanddicke von 1,4 mm und einen Durchmesser von 50 mm. Die spezifische Belastung wird über die Lagerbreite eingestellt, die Drehzahl beträgt 4000 U/m. Bewertungskriterien sind Gleitschichtermüdung und Verschleiß nach 100h Dauerlauf. Angegeben ist die Grenzbelastung in MPa, bei der auf maximal 5% der Gleitfläche die Schicht bis zum Substrat verschlissen ist oder Ermüdung vorliegt.

Um die Wirkung des FeₑO₃ zu belegen, sind in Tabelle 1 jeweils mit einem R bezeichnete Referenzversuche aufgeführt. Die Versuche zeigen, dass durch den Zusatz von Fe₂O₃ eine Steigerung der Belastbarkeit um bis zu 20% möglich ist.

Bei den Aluminiumsubstraten, Beispiele 17-22, ist jeweils die Ermüdungsfestigkeit des Substrats der limitierende Faktor, jedoch wird auch hier aufgrund einer verbesserten Anpassungsfähigkeit durch das erfindungsgemäße Gleitschichtmaterial eine Verbesserung erzielt. Hauptzweck des erfindungsgemäßen Gleitschichtmaterials ist es jedoch, hierbei die Gleiteigenschaften zu optimieren, wenn in der Legierung nur ein geringer Anteil der Weichphase enthalten ist.

Die Doppelschicht in Beispiel 23 ist so ausgelegt, dass eine erhöhte Anpassungsfähigkeit durch den geringeren Bindemittel- und höheren Festschmierstoffanteil in der oberen Schicht vorliegt.

Beispiel 24 ist eine Schichtauslegung für Wellen mit schlechten Oberflächen wie Kugelgrauguss, die durch die Hartstoffe zusätzlich poliert werden.

In Beispiel 25 steigt die Konzentration des Fe₂O₃ in der unteren Schicht an und erhöht die Verschleißfestigkeit, wobei die obere Schicht vorzugsweise als Anpassungsschicht ausgelegt ist.

## Patentansprüche

1. Gleitelement mit einem Substrat und mit mindestens zwei auf dem Substrat aufgebrachten Schichten aus einem Gleitschichtmaterial, wobei das Gleitschichtmaterial aus einem, mindestens ein vernetzbares Bindemittel oder mindestens ein hochschmelzendes Thermoplastmaterial aufweisenden Gleitlack oder aus einem Material besteht, das eine Matrix aus mindestens einem hochschmelzenden Thermoplastmaterial oder mindestens einem Duroplastmaterial aufweist, und das Gleitschichtmaterial Fe₂O₃ enthält.

2. Gleitelement nach Anspruch 1, **dadurch gekennzeichnet, dass** der Fe₂O₃-Gehalt in der unteren Schicht höher ist als in der oberen Schicht.

3. Gleitelement nach Anspruch 1 oder 2, **dadurch gekennzeichnet,**
**dass** mehr als zwei Schichten aus Gleitschichtmaterial auf dem Substrat aufgebracht sind und
**dass** der Fe₂O₃-Anteil von der untersten bis zur obersten Schicht abnimmt.

4. Gleitelement nach Anspruch 3, **dadurch gekennzeichnet, dass** in der obersten Schicht kein Fe₂O₃ enthalten ist.

5. Gleitelement nach Anspruch 4, **dadurch gekennzeichnet, dass** der Fe₂O₃ -Anteil innerhalb einer Schicht kontinuierlich von unten nach oben abnimmt.

6. Gleitelement nach einem der Ansprüche 1 bis 5, **dadurch gekennzeichnet, dass** das vernetzbare Bindemittel des Gleitlackes aus PAI, PI, Epoxyharz, PBI, und/oder Silikonharz besteht.

7. Gleitelement nach einem der Ansprüche 1 bis 5, **dadurch gekennzeichnet, dass** das Bindemittel ein mittels UV-Strahlung aushärtendes Bindemittel ist.

8. Gleitelement nach einem der Ansprüche 1 bis 5, **dadurch gekennzeichnet, dass** das hochschmelzende Thermoplastmaterial aus Polyarylat, PEEK und/oder PES besteht.

9. Gleitelement nach einem der Ansprüche 1 bis 5, **dadurch gekennzeichnet, dass** das Duroplastmaterial aus PAI, PI, Epoxyharz, PBI, und/oder Silikonharz besteht.

10. Gleitelement nach einem der Ansprüche 1 bis 9, **dadurch gekennzeichnet, dass** der Anteil des Fe₂O₃ bezogen auf das gesamte Gleitschichtmaterial 0,1 bis 15 Vol.-% beträgt.

11. Gleitelement nach einem der Ansprüche 1 bis 10, **dadurch gekennzeichnet, dass** das Gleitschichtmaterial Festschmierstoffe mit einem Anteil von bis zu 30 Vol.-% enthält.

12. Gleitelement nach einem der Ansprüche 1 bis 11, **dadurch gekennzeichnet, dass** das Gleitschichtmaterial Hartstoffe mit einem Anteil von bis zu 5 Vol.-% enthält.

13. Verwendung des Gleitelements nach Anspruch 1 für mediengeschmierte Anwendungen.

14. Verwendung des Gleitelements nach Anspruch 1 als Gleitlager in Verbrennungsmotoren oder als Gleitlager von Kurbelwellen oder als Kolbenring oder als Kolbenhemd.

## Claims

1. Sliding element having a substrate and having at least two layers which are applied to the substrate and which comprise a sliding layer material, wherein
the sliding layer material comprises a sliding lacquer which has at least one cross-linkable binding agent or at least one refractory thermoplastic material or
a material which has a matrix comprising at least one refractory thermoplastic material or at least one thermosetting material, and
the sliding layer material contains Fe₂O₃.

2. Sliding element according to claim 1, **characterised in that** the Fe₂O₃ content in the lower layer is higher than in the upper layer.

3. Sliding element according to claim 1 or claim 2, **characterised in that** more than two layers of sliding layer material are applied to the substrate and
**in that** the Fe₂O₃ proportion decreases from the lowest to the uppermost layer.

4. Sliding element according to claim 3, **characterised in that** no Fe₂O₃ is contained in the uppermost layer.

5. Sliding element according to claim 4, **characterised in that** the Fe₂O₃ proportion within a layer decreases continuously from the bottom to the top.

6. Sliding element according to any one of claims 1 to 5, **characterised in that** the cross-linkable binding agent of the sliding lacquer comprises PAI, PI, epoxy resin, PBI and/or silicone resin.

7. Sliding element according to any one of claims 1 to 5, **characterised in that** the binding agent is a binding agent which hardens by means of UV radiation.

8. Sliding element according to any one of claims 1 to 5, **characterised in that** the refractory thermoplastic material comprises polyarylate, PEEK and/or PES.

9. Sliding element according to any one of claims 1 to 5, **characterised in that** the thermosetting material comprises PAI, PI, epoxy resin, PBI and/or silicone resin.

10. Sliding element according to any one of claims 1 to 9, **characterised in that** the proportion of Fe₂O₃ with respect to the entire sliding layer material is from 0.1 to 15% by volume.

11. Sliding element according to any one of claims 1 to 10, **characterised in that** the sliding layer material contains solid lubricants at a proportion of up to 30% by volume.

12. Sliding element according to any one of claims 1 to 11, **characterised in that** the sliding layer material contains hard materials having a proportion of up to 5% by volume.

13. Use of the sliding element according to claim 1 for media-lubricated applications,

14. Use of the sliding element according to claim 1 as a plain bearing in internal combustion engines or as a plain bearing for crankshafts or as a piston ring or as a piston skirt.

## Revendications

1. Elément de glissement comprenant un substrat et au moins deux couches d'un matériau à couches de glissement, déposées sur ledit substrat, sachant que
ledit matériau à couches de glissement consiste en une laque de glissement présentant au moins un liant réticulable, ou au moins un matériau thermoplastique à point de fusion élevé, ou
en un matériau comportant une matrice constituée d'au moins un matériau thermoplastique à point de fusion élevé, ou d'au moins un matériau thermodurcissable ; et que
ledit matériau à couches de glissement contient du Fe₂O₃.

2. Elément de glissement selon la revendication 1, **caractérisé par le fait que** la teneur en Fe₂O₃ est plus élevée, dans la couche inférieure, que dans la couche supérieure.

3. Elément de glissement selon la revendication 1 ou 2, **caractérisé par le fait que** plus de deux couches de matériau à couches de glissement sont déposées sur le substrat ; et
que la part de Fe₂O₃ décroît depuis la couche inférieure extrême jusqu'à la couche supérieure extrême.

4. Elément de glissement selon la revendication 3, **caractérisé par le fait**
**que** la couche supérieure extrême ne renferme pas de Fe₂O₃.

5. Elément de glissement selon la revendication 4, **caractérisé par le fait**
**que** la part de Fe₂O₃ décroît continûment de bas en haut à l'intérieur d'une couche.

6. Elément de glissement selon l'une des revendications 1 à 5, **caractérisé par le fait que** le liant réticulable de la laque de glissement est constitué de PAI, de PI, de résine époxy, de PBI et/ou de résine de silicone.

7. Elément de glissement selon l'une des revendications 1 à 5, **caractérisé par le fait que** le liant est un liant durcissant sous l'action d'un rayonnement UV.

8. Elément de glissement selon l'une des revendications 1 à 5, **caractérisé par le fait que** le matériau thermoplastique à point de fusion élevé est constitué de polyacrylate, de PEEK et/ou de PES.

9. Elément de glissement selon l'une des revendications 1 à 5, **caractérisé par le fait que** le matériau thermodurcissable est constitué de PAI, de PI, de résine époxy, de PBI et/ou de résine de silicone.

10. Elément de glissement selon l'une des revendications 1 à 9, **caractérisé par le fait que** la part du Fe₂O₃ représente de 0,1 à 15 % en volume, rapportée à la totalité du matériau à couches de glissement.

11. Elément de glissement selon l'une des revendications 1 à 10, **caractérisé par le fait que** le matériau à couches de glissement contient des lubrifiants solides dont la part atteint jusqu'à 30 % en volume.

12. Elément de glissement selon l'une des revendications 1 à 11, **caractérisé par le fait que** le matériau à couches de glissement contient des matières dures dont la part atteint jusqu'à 5 % en volume.

13. Utilisation de l'élément de glissement conforme à la revendication 1, pour des applications à lubrification par fluides.

14. Utilisation de l'élément de glissement conforme à la revendication 1, en tant que palier de glissement dans des moteurs à combustion interne ou en tant que palier de glissement de vilebrequins, ou en tant que segment de piston, voire en tant que jupe de piston.
